# EUROPEAN PATENT APPLICATION

(11) **EP 2 468 151 A1**
(43) Date of publication of application: **27.06.2012**
(21) Application number: 11425305.7
(22) Date of filing: 21.12.2011
(51) Int. Cl.: A47J 31/36

(54) **Pod coffee machine**

(30) Priority: 22.12.2010 IT EN20100001 P
(71) Applicant: Arena, Giuseppe, 94100 Enna (IT)
(72) Inventor: Arena, Giuseppe, 94100 Enna (IT)

(57) **Abstract**

A coffee machine that uses filter paper pods for the preparation of a brewed beverage comprises a coffee pod filter basket (11) and a holder (12) thereof frontally bearing a nozzle (3) for the beverage exit. A carrying mechanism (18) of the coffee pod filter basket holder (12) includes a plate (58) provided with a threaded opening (60) and a vertical locking pin (61), and an adjusting head (59) in contact with the coffee pod filter basket holder (12). The adjusting head (59), having a central through hole (64), can be screwed and unscrewed in the threaded opening (60) to adjust the distance of the coffee pod filter basket (11) from the heating block (10). The coffee pod filter basket holder (12), being blocked with respect to the plate (58), has a central stem (55) adapted to be received in the central through hole (64) of the adjusting head (59).

## Description

The present invention relates to a coffee machine that uses pods, i.e. pads of coffee wrapped in filter paper, for the preparation of a brewed beverage.

A coffee machine similar to the subject-matter of this patent application is produced by DIDIESSE Srl. of Naples. Such a coffee machine comprises an apparatus and a housing having pairs of uprights and side bodies to support the apparatus. In particular, the apparatus includes a water tank, a water supply system, a heating block and a coffee pod filter basket. The heating block is connected to the water tank through the water supply system comprising at least one water pump and one solenoid valve. The heating block is generally a cylindrical mass provided with a central hole which houses a helically grooved element being connected to the water supply system. Provided in the heating block are a hole to accommodate a cylindrical resistor and two threaded holes suitable to receive a running thermostat and, respectively, a manual reset safety thermostat. The resistor, the running thermostat and the safety thermostat make part of an electrical circuit that allows an automatic operation of the apparatus.

The heating block is mounted movable in a frame thereof so as to approach to and move away from the coffee pod filter basket by means of a manually operated device. The manually operated device comprises a crank gear operated by a handle lever. By virtue of this arrangement, when the heating block is in a position close to the coffee pod filter basket, the bottom of the heating block up closes hermetically the coffee pod filter basket, and water fed from the tank and heated while passing through the heating block escapes, after the brewing process, from a nozzle located down to the coffee pod filter basket. When the heating block is in its position away from the coffee pod filter basket, the bottom of the heating block is separated from the coffee pod filter basket by a gap that allows a used coffee pod to be extracted and a new coffee pod to be inserted.

In the coffee machine of DIDIESSE S.r.l. the above frame on which the heating block is mounted movable has substantially a U-shape, the frame being open up between wings of the U-shape and closed in the core of the U-shape which forms the lower part of the heating block frame. The coffee pod filter basket is fastened to the lower part of the heating block frame below the heating block itself, by means of a threaded coupling, a gauged thickness plate being interposed between the heating block and the frame thereof. This plate is used to adjust the relative position between the bottom of the heating block and the coffee pod filter basket so that, when the heating block is in the position close to the coffee pod filter basket, the bottom of the heating block hermetically closes the coffee pod filter basket.

However, it happens that the relative distance between the bottom of the heating block and the coffee pod filter basket, which is changed by the manually operated device in the normal operation of the coffee machine, can also vary for other reasons. These causes, including wear of parts of the apparatus, dimensional variations due to changes in temperature and other causes, can lead to a not sealed closure between the bottom of the heating block and the coffee pod filter basket during the brewing process.

It should be understood that an adjustment of the mutual distance between the bottom of the heating block and the coffee pod filter basket by means of the gauged thickness plates involves that a trouble-shooter dismounts the coffee pod filter basket and replaces the gauged thickness plate with another one, to achieve again a tightness during the brewing process. This drawback causes a period in which the coffee machine is out of order.

Another drawback determined by the frame structure of the heating block of the coffee machine mentioned above is the fact that such a structure does not allow a periodic cleaning of the coffee pod filter basket, since the latter is closed within the frame structure of the heating block.

Therefore, an object of the present invention is to produce a coffee machine that uses coffee pods made of filter paper with a ready adjustment of the position of the coffee pod filter basket inside the heating block frame.

Another object of the invention is to permit a regular cleaning of the coffee pod filter basket without dismounting the coffee machine.

In general, an object of the invention is to create a robust, easy to use, coffee machine which can provide a coffee cup with all the features of an Italian espresso, where any gauge adjustment of the pressure of the coffee pod is made from outside, without removing parts of the coffee machine.

To achieve the above objects, the present invention provides a coffee machine that uses paper pods as described in the main claim and its dependent claims.

Additional features and advantages of the invention will be mostly clear from the detailed description of a preferred embodiment thereof, in connection with the accompanying drawings, wherein:
Figure 1 is a diagrammatic perspective view of a coffee machine that uses coffee pods according to the invention;
Figure 2 is a perspective view of an internal supporting structure inside the coffee machine of Figure 1;
Figure 3 is a perspective view of a brewing system of the coffee machine of Figure 1;
Figure 4 is an exploded perspective view of component parts of the brewing system of the coffee machine in Figure 1, and
Figure 5 is a partially exploded perspective view of some parts of the brewing system in Figure 3.

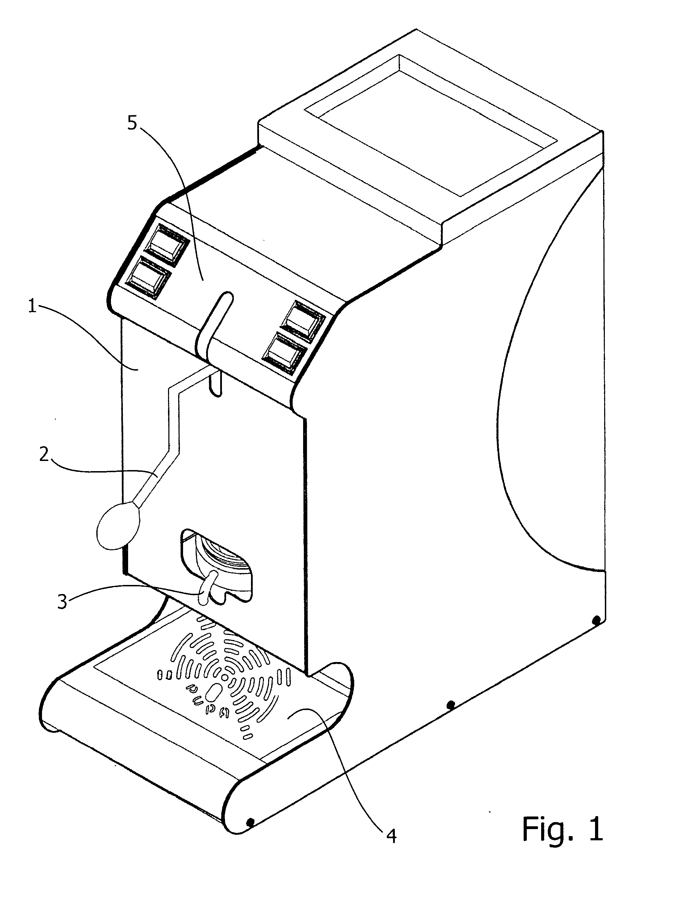

With reference to Figure 1, which is a diagrammatic perspective view of a coffee machine according to the invention, an overall appearance thereof is depicted.

The coffee machine that uses pods, i.e. pads of coffee wrapped in filter paper, for the preparation of the brewed beverage, comprises a casing with front panel 1, for example made of stainless steel, from which an operating lever 2 and a nozzle 3 protrude. A drip pan 4, e.g. made of ABS, projects ahead to the front panel 1, and a power switch and a water supply, with buttons and working indicators, project on an upper sloped plan 5. A water tank (not shown) is on the back part of the casing of the coffee machine also in the form of plastic bottles.

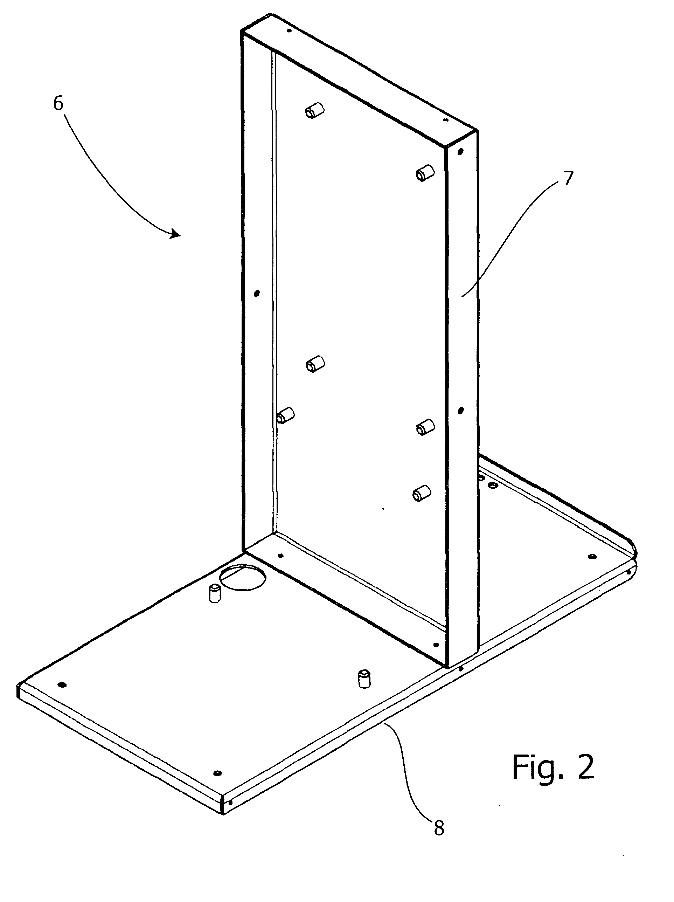

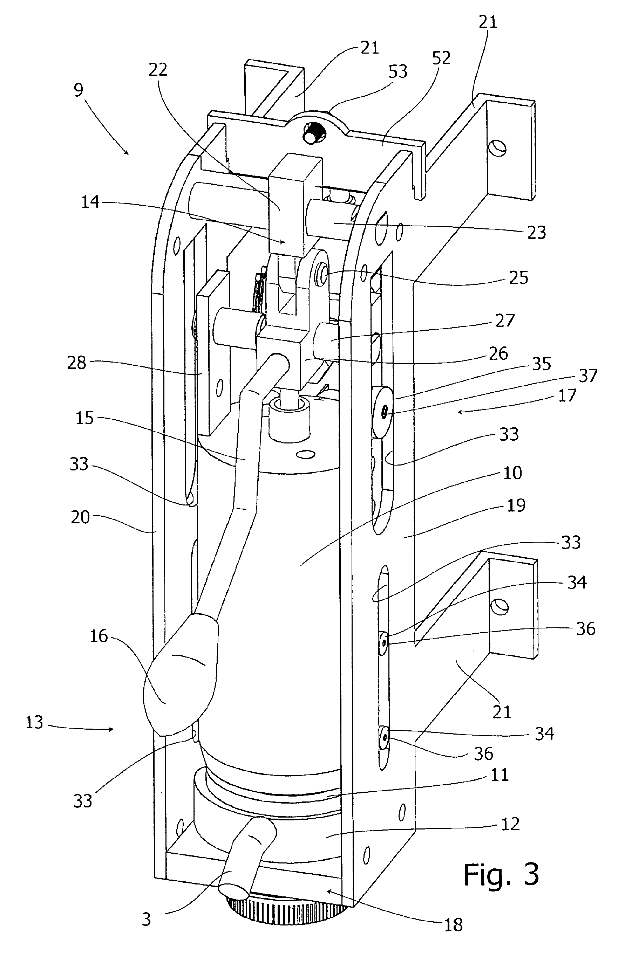

An internal supporting structure 6 of the coffee machine in Figure 1, comprising a vertical wall 7 and a base 8 attached one to other, is shown in a perspective view in Figure 2. The internal supporting structure 6, preferably made of painted steel, serves to secure the casing of the machine and the brewing system indicated generally as 9 and shown in Figure 3 in perspective view.

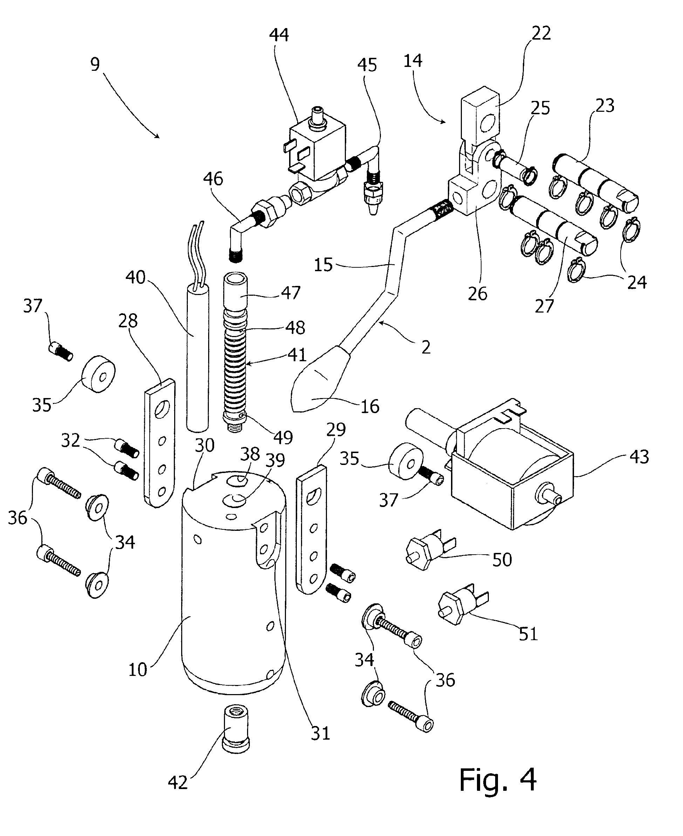

The brewing system 9 comprises, in addition to the water tank above mentioned, resting on the base 8 behind the vertical wall 7, a water supply system partially shown in Figure 4, which is an exploded perspective view of component parts of the brewing system 9 of the coffee machine according to the invention.

Referring to Figure 3, there are a block heater 10, a coffee pod filter basket 11, a coffee pod filter basket holder 12 having in front a output nozzle 3 for the beverage. Moreover, shown in Figure 3 is a manually operated device, that, indicated generally as 13, comprises a crank gear 14 commanded by the operating lever 2 having a bent rod 15 and a handle 16. The heating block 10, the coffee pod filter basket 11, the coffee pod filter basket holder 12 and the manually operated device 13 are mounted on a frame 17 which is fixed to the vertical wall 7 of the internal supporting structure 6 (Figure 2). The frame 17 is equipped down with a carrying mechanism for the coffee pod filter basket holder 12, the support mechanism being indicated generally as 18 and described in detail later. The frame 17 has side wings 19, 20 on which the heating block 10 is mounted vertically sliding so as to be approached to and moved away from the coffee pod filter basket 11 by means of the crank gear 14. The side wings 19, 20 of the frame 17 are provided with angle brackets, generally indicated as 21, which serve for fastening the frame 17 to the vertical wall 7 of the internal supporting structure 6.

Referring to Figure 4, parts of the brewing system 9 are shown in more detail. The crank gear 14, preferably made of brass, of the manually operated device 13 includes a crank 22 swinging mounted on an upper shaft 23 that is fixed to the side wings 19, 20 of frame 17. The crank 22 is restrained by circlips indicated generally as 24, which serve to restrain also the other parts of the crankshaft 14. The handle 22 is articulated by means of a pin 25 to a connecting rod 26 swinging mounted on a lower shaft 27. The lower shaft 27 is fixed on a pair of arms 28, 29, which are mounted in respective seats 30, 31 peripherally made in the heating block 10, by screws indicated generally as 32.

Shortly, the crank gear 14 of the manually operated device 13 comprises the upper shaft 23 fixed to the side wings 19, 20 of the frame 17, and a lower shaft 27 fixed to the heating block 10 by means of its opposite arms 28, 29. The crank 22 is swinging mounted onto the upper shaft 23 and the connecting rod 26 is swinging mounted on the lower shaft 27. The crank 22 and the connecting rod 26 are mutually articulated to each other through the pin 25 for lifting the heating block 10 with respect to the coffee pod filter basket 11 by means of the bent rod 15 with handle. The bent rod 15 is screwed to the connecting rod 26, but alternatively it may be coupled to the handle 22.

Made on the side wings 19, 20 are opposite slots generally indicated as 33, two in number on each wing in this embodiment of the invention. The heating block 10 and its arms 28, 29 have sliding members engaging the slots 33 in the form of two pairs of brass bushings 34 with edge and a pair of rollers 35 made of PVC, being mounted on screws 36 to the heating block 10 and on screws 37 to the arms 28, 29 respectively. The screws 36, 37 act as pivots for the sliding members engaging the slots 33.

The heating block 10 is substantially cylindrical mass, e.g. made of an anti-corrosion aluminium alloy, in which a blind hole 38 and a through hole 39 are longitudinally bored. The blind hole 38 houses a cartridge heating element 40 connected to a electrical system (not described in detail) of the coffee machine. The through hole 39 receives a helically grooved member 41 which is connected to the water supply system and ends down with a threaded coupling for the connection to a socket 42 for spraying water. In the water supply system, the aforementioned tank is connected to a hose, also not shown, on which a pump 43 and, downstream of latter, a solenoid valve 44 are mounted. The solenoid valve 44 is provided downstream of a first elbow 45 and upstream of a second elbow 46. The second elbow 46 is connected to the helically grooved member 41. The flow of water through the pump 43 and the solenoid valve 44 reaches a fitting 47 in the top of the helically grooved member 41, passes to the through hole 39 through small upper radial holes 48, flows on the helical profile of the helically grooved member 41 and enter again the helically grooved member 41 through small lower radial holes 49. Thus, heated water reaches the socket 42 for spraying water that is screwed to the end of the helically grooved member 41 from the bottom of the heating block 10.

The bottom of the heating body 10 is formed concave to accommodate the coffee pod (not shown) and peripherally has a circumferential recess for an O-ring seal, both not shown in the drawings.

The water temperature is controlled by a running thermostat 50 that allows a constant temperature of the water to be maintained. However, a manual reset safety thermostat 51 provides the power outage in case of failure of the running thermostat 50. Their arrangement on the heating block is not shown. The socket 42 evenly distributes heated water on the coffee pod to obtain a perfect brewing of coffee.

As shown in Figure 3, the heating block 10 slides vertically by means of the four bushings 34 and the two rollers 35 within the slots 33 of the side wings 19, 20. Over the side wings 19, 20 a traverse 52 is set in which a screw adjustable abutment member 53 horizontally engaging the crank 22 is provided. The screw adjustable abutment member 53 sets the centre of gravity of the brewing system, while the beverage is dispensed, to allow the heating block 10 to be locked to a filter unit comprised of the coffee pod filter basket 11 and the coffee pod filter basket holder 12.

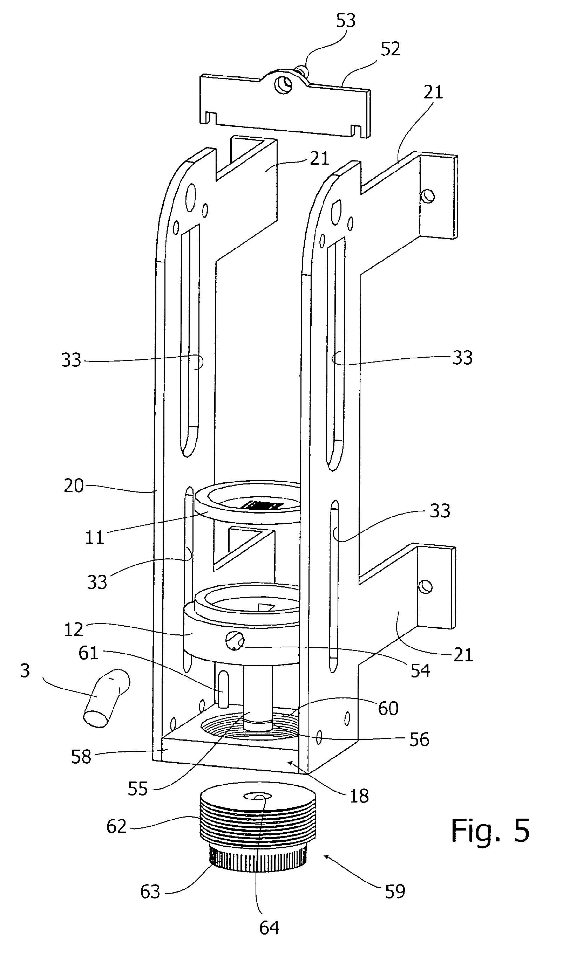

As shown in Figure 5, which is an exploded perspective view of some parts of the brewing system in Figure 3, with the exception of the heating block and operating parts thereof, the filter assembly comprises the coffee pod filter basket 11 attached to the coffee pod filter basket holder 12. The coffee pod filter basket holder 12 is hollow and its cavity communicates with outside through a hole 54 in which the nozzle 3 is inserted for the beverage exit. In addition, the coffee pod filter basket holder 12 is provided with a central stem 55 having a circumferential groove 56 for a vertically retaining O-ring.

The coffee pod filter basket holder 12 is supported by the carrying mechanism 18 that includes a plate 58 and an adjusting head 59. The plate 55 has a threaded opening 60 and a vertical locking pin 61. The adjusting head 59, which in operation is in contact with the coffee pod filter basket holder 12, has a first outer threaded surface 62 for screwing in the threaded opening 60, and a second grip outer surface 63, which is preferably knurled. By acting on the second grip outer surface of socket 63, one can screw and unscrew the adjusting head 59 in order to adjust the distance of the coffee pod filter basket 11 from the heating block 10 so that in the closed position the coffee pod filter basket 11 is in a sealing contact with the O-ring seal on the bottom of the heating block 10. The adjusting head 59 is provided with a central through hole 64 suitable to receive the central stem 55 of the coffee pod filter basket holder 12 so that the central stem 55 protrudes down from the adjusting head 59. The O-ring in the circumferential groove 56 of the central stem 55 prevents the coffee pod filter basket holder 12 to be separated from the adjusting head 59 in normal operation. The coffee pod filter basket holder 12, preferably made of Teflon, has an external vertical recess (not shown) engaging the vertical locking pin 61 of the plate 58 to prevent rotation of the coffee pod filter basket holder 12 with respect to the frame 17 of the coffee machine.

Shortly, the central stem 55 being inserted into the central hole 64 of adjusting head 59, preferably of metal, serves to guide and adjust the coffee pod filter basket holder 12 for the pressure of the coffee pod by exercising a manually rotating movement in the direction of the heating block 10. The O-ring in the central stem 55 of the coffee pod filter basket holder 12 prevents the latter to get out from the central hole 64 of the adjusting head 59. The vertical locking pin 61 serves to guide the coffee pod filter basket holder 12 to prevent rotational movements in handling the adjusting head 59. For performing a thorough washing of the coffee pod filter basket 11, the coffee pod filter basket holder 12 and the bottom of the heating block, it is sufficient to fully unscrew the adjusting head 59, after removing the O-ring from the circumferential 56 of the central stem 55. In this way, the coffee pod filter basket holder 12 and the coffee pod filter basket 11 may be removed from the brewing system 9 and washed.

## Claims

1. A coffee machine that uses filter paper pods for the preparation of a brewed beverage, comprising:
- an internal supporting structure (6),
- a water tank,
- a water supply system (43-46),
- a heating block (10) in the form of a cylindrical mass provided with a central through hole (39) which houses a helically grooved member (41) being connected to the water supply system (43-46) to channel water that is heated,
- a coffee pod filter basket (11),
- a coffee pod filter basket holder (12) frontally bearing a nozzle (3) for the beverage exit;
- a manually operated device (13), including a crank gear (14) controlled by an operating lever (2), and
- a frame (17) which is fixed to the internal supporting structure (6) and is provided down with a carrying mechanism (18) of the coffee pod filter basket holder (12) and side wings (19, 20) on which the heating block (10) is mounted vertically sliding so as to be approached to and moved away from the coffee pod filter basket (11) by means of said crank gear (14),
**characterised in that** said carrying mechanism (18) of the coffee pod filter basket holder (12) further comprises:
- a plate (58) provided with a threaded opening (60) and a vertical locking pin (61),and
- an adjusting head (59) in contact with the coffee pod filter basket holder (12) (12), the adjusting head (59) having a first threaded outer surface (62) to screw in said threaded opening (60) and a second grip outer surface (63), both said surfaces co-operating in order to adjust the distance of the coffee pod filter basket (11) from the heating block (10), the adjusting head (59) being provided with a central through hole (64);
said coffee pod filter basket holder (12) being provided with a central stem (55) suitable to be received in the central through hole (64) of the adjusting head (59), and a vertical peripherical recess engaging the vertical locking pin (61) of the plate (58) to prevent rotation of the coffee pod filter basket holder (12) with respect to said frame (17).

2. The coffee machine according to claim 1, wherein said central stem (55) of the coffee pod filter basket holder (12) has a circumferential groove (56) for a vertical retaining O-ring with respect to the adjusting head (59).

3. The coffee machine according to claim 1, wherein the crank gear (14) of the manually operated device (13) comprises an upper shaft (23) fixed to the side wings (19, 20) of the frame (17) and a lower shaft (27) attached to the heating block (10) by its opposite arms (28, 29), a crank (22) swinging mounted on the upper shaft (23) and a connecting rod (26) swinging mounted on the lower shaft (27) mutually articulated for lifting the heating block (10) with respect to the coffee pod filter basket (11) by said operating lever (2).

4. The coffee machine according to claim 3, wherein said operating lever (2) comprises a bent rod (15) that is rigidly coupled to the connecting rod (26).

5. The coffee machine according to claim 3, wherein said side wings (19, 20) of the frame (17) have slots (33) for the vertical sliding of the heating block (10), and said two opposite arms (28, 29) and said heating block (10) include opposite pins provided with members slidingly engaging said slots.

6. The coffee machine according to claim 3, wherein said frame (17) includes up a traverse (52) between said side wings (19, 20) in which a screw adjustable abutment member (53) engaging the crank (22) is horizontally provided.

7. The coffee machine according to claim 1, wherein the side wings (19, 20) of the frame (17) are equipped with angle brackets (21) for fixing the frame (17) to the internal supporting structure (6).

8. The coffee machine according to claim 1, wherein said helically grooved member (41) being connected to the water supply system (43-46) is threadedly coupled in its lower end with a socket (42) for spraying water adapted to brew the coffee pod.
